# EUROPÄISCHE PATENTSCHRIFT

(11) **EP 0 816 652 B1**
(45) Veröffentlichungstag und Bekanntmachung des Hinweises auf die Patenterteilung: **27.03.2002**
(21) Anmeldenummer: 97110115.9
(22) Anmeldetag: 20.06.1997
(51) Int. Cl.: F01P 11/20, F02F 11/00, F16J 15/06, F02N 17/06

(54) **Verfahren und Anordnung zum Erwärmen der Kühlflüssigkeit einer Brennkraftmaschine**
Method and device for heating the coolant liquid of an internal combustion engine
Procédé et dispositif de chauffage de liquide de refroidissement d'un moteur à combustion interne

(30) Priorität: 05.07.1996 DE 19627101
(43) Veröffentlichungstag der Anmeldung: 07.01.1998
(73) Patentinhaber: Volkswagen Aktiengesellschaft, 38436 Wolfsburg (DE)
(72) Erfinder: Heinemann, Rolf, Dipl.-Ing., 38165 Lehre (DE)

(56) Entgegenhaltungen:
- EP-A- 0 308 033
- GB-A- 2 114 720
- GB-A- 2 263 320
- US-A- 2 487 326
- US-A- 4 634 834
- US-A- 5 285 963

## Beschreibung

Die Erfindung betrifft eine Anordnungen zum Erwärmen der Kühlflüssigkeit einer Brennkraftmaschine vor oder nach einem Start dieser Brennkraftmaschine gemäß dem Oberbegriff des Anspruchs 1 sowie eine Verwendung dieser Anordnung nach Anspruch 2.

Es sind bereits eine Vielzahl von Vorschläge bekannt geworden, die Kaltstartphase einer Brennkraftmaschine zur Emissionsreduzierung zu verkürzen. Ein geeignetes Mittel ist die Erwärmung der Kühlflüssigkeit, entweder Wasser oder Öl, unmittelbar vor oder nach einem Start der Brennkraftmaschine.

Aus der GB 2 263 320 A ist eine Zylinderkopfdichtung bekannt, in die elektrische Heizdrähte im Bereich von Kühlflüssigkeitsdurchtritten integriert sind. Diese werden an eine elektrische Stromquelle angeschlossen und heizen so vorbei strömende Kühlflüssigkeit auf. Diese Anordnung hat jedoch den Nachteil, daß das Einbringen von elektrischen Heizdrähten in die Zylinderkopfdichtung aufwendig und kostenintensiv ist.

Aus der DE-OS 18 02 794 ist es bekannt, in eine seitliche Begrenzungswand eines Kühlwassermantels einer Brennkraftmaschine eine durch elektrische Widerstandserwärmung beheizte Heizspirale einzusetzen.

Desweiteren ist in DE-OS 21 15 221 eine Vorrichtung zum Beheizen des Motors von Fahrzeugen offenbart, in welcher die Ölwanne dieses Motors zur Erwärmung des Motoröls mit einer elektrischen Widerstandsheizung versehen ist. Diese kann dabei beispielsweise als elektrischer Widerstandsstab, welcher direkt in das Ölvolumen eintaucht oder als an der Außenseite der Ölwanne angeordnetes elektrisches Widerstandselement ausgebildet sein. Als Energiequelle wird vorgeschlagen, die bordeigene Fahrzeugbatterie des Fahrzeuges oder aber eine Steckdose eines externen Stromnetzes zu verwenden.

In DE-31 04 97 A1 ist eine dem zuvor genannten Stand der Technik ähnliche Vorrichtung für die Ölwanne eines Verbrennungsmotors vorgesehen, wobei hier zusätzlich vorgeschlagen wird, den in die Ölwanne eingesetzten Heizstab mittels eines Kabelanschlusses mit dem Heck des Fahrzeuges zu verbinden und von diesem Heck aus eine elektrische Verbindung zu einem externen Stromnetz bereitzustellen. Zusätzlich wird vorgeschlagen, dem Heizstab einen Regelthermostaten zuzuordnen.

Der vorgenannte Stand der Technik weist den Nachteil auf, daß im Falle der direkten Ölerwärmung die übrigen Teile der Brennkraftmaschine nur mäßig erwärmt werden, sowie zumeist zusätzliche Bauteile erforderlich sind und daß im Falle der Erwärmung des Kühlwassers mittels einer Heizschlange ein erheblicher zusätzlicher Bauteilaufwand erforderlich ist.

Der Erfindung liegt die Aufgabe zugrunde, eine Anordnung zum Erwärmen der Kühlflüssigkeit einer Brennkraftmaschine anzugeben, welche mit einem geringen Bauteilaufwand innerhalb einer kurzen Zeitspanne für eine effektive Erwärmung der Kühlflüssigkeit sorgt.

Die Lösung dieser Aufgabe gelingt bei der Anordnung der o.g. Art mit den in Anspruch 1 gekennzeichneten Merkmalen.

Erfindungsgemäß ist vorgesehen, daß die Zylinderkopfdichtung einen gemeinsam mit ihr ausgebildeten, über seitliche Begrenzungen von Zylinderkopf bzw. Gehäuse hinausgehenden Koppelbereich aufweist, auf welchen ein Koppelelement wirkt, welches bzgl. der Zylinderkopfdichtung elektrisch isoliert und mit einem elektrischen Stromkreis derart verbunden und als Widerstandselement ausgebildet ist, daß es Wärmeenergie in die Zylinderkopfdichtung einbringt.

Vorteilhafterweise ist mit der Erfindung ein vorhandenes Bauteil für einen zusätzlichen Zweck genutzt, so daß der Aufwand für ein separates Heizelement entfällt.

Die Einkoppelung der Energie erfolgt unmittelbar mittels des Koppelelementes. Die Zylinderkopfdichtung ist abschnittsweise mit über die seitlichen Begrenzungswände von Zylinderkopf bzw. Kurbelgehäuse hinaus stehenden Fahnen versehen, welche als Koppelbereiche für das darauf gesetzte Koppelelement wirken. Solche Fahnen sind vielfach zu Identifikations- und Zuordnungszwecken bereits vorhanden. Das Koppelelement ist als Widerstandselement ausgebildet und mit einem elektrischen Stromkreise verbunden und überträgt die in ihm erzeugte Wärmeenergie durch flächige Anlage in die Zylinderkopfdichtung.

Die vorbeschriebene Erfindung ist sowohl bei stationären wie auch bei mobilen Brennkraftmaschinen vorteilhaft einsetzbar. Ein besonders bevorzugtes Einsatzgebiet sind Brennkraftmaschinen, welche in Kraftfahrzeugen verbaut sind. Hierbei ergibt sich insbesondere der Vorteil, daß durch rasches Erreichen der Betriebstemperatur der Brennkraftmaschine vergleichsweise geringe Emissionen auftreten und ein im Abgasstrang der Brennkraftmaschine angeordneter Katalysator vergleichsweise früh seine Anspringtemperatur erreicht. Somit sind in vereinfachter Weise gesetzlich vorgeschriebene Abgasgrenzwerte zu erreichen bzw. zu unterbieten.

Weitere Vorteile und Merkmale der Erfindung ergeben sich aus dem nachfolgend anhand einer Zeichnung näher erläuterten Ausführungsbeispiel.

Es zeigen:

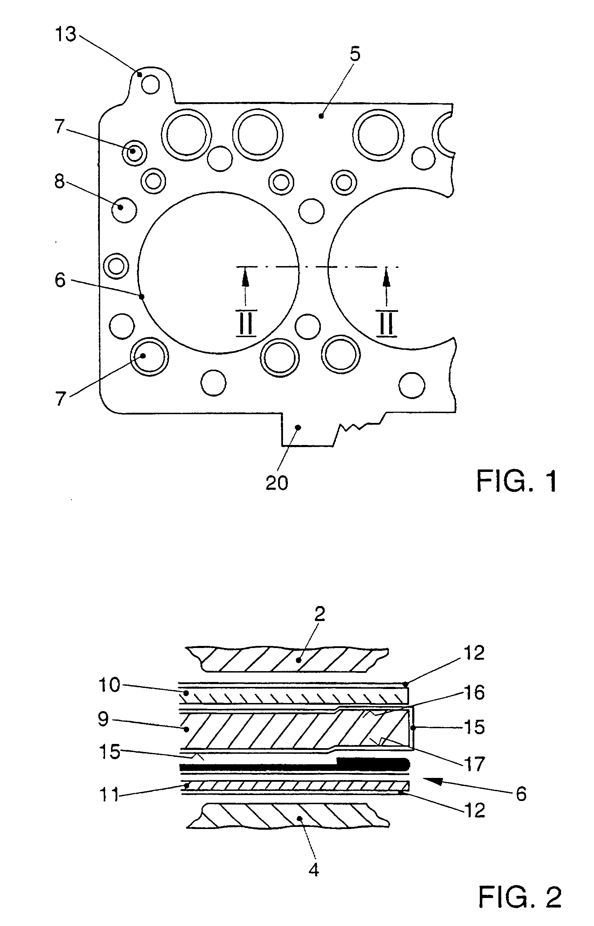

- Figur 1: eine Draufsicht auf eine nur teilweise dargestellte Zylinderkopfdichtung,
- Figur 2: einen Schnitt entlang der Linie II - II gemäß Figur 1,

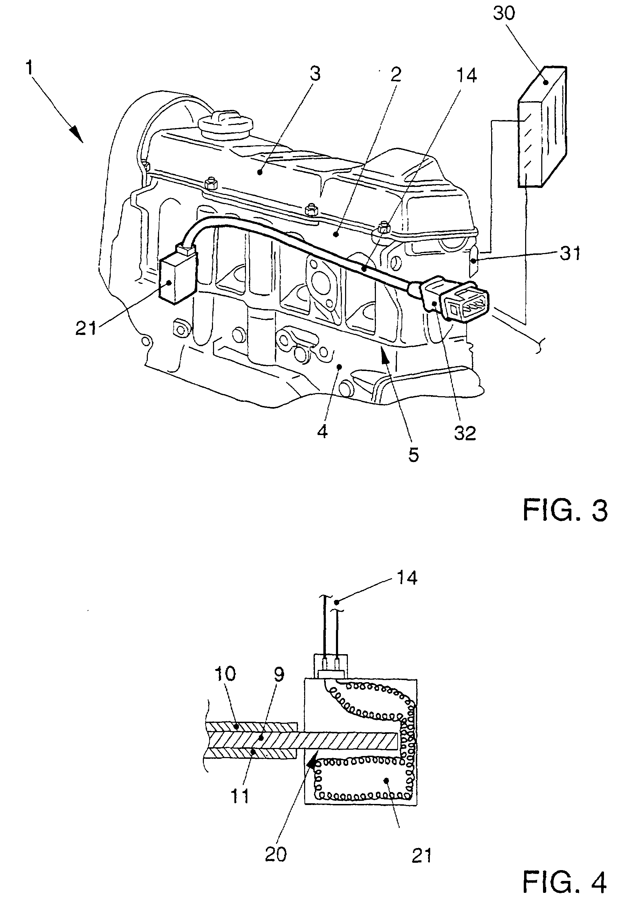

- Figur 3: in perspektivischer Ansicht einer Brennkraftmaschine und
- Figur 4: einen Querschnitt durch einen Bereich einer Zylinderkopfdichtung mit angesetztem Koppelelement.

Eine in einem nicht gezeigten Kraftfahrzeug verbaute Brennkraftmaschine 1 weist einen Zylinderkopf 2 mit einer Zylinderkopfhaube 3 auf, wobei der Zylinderkopf 2 auf ein Gehäuse 4 in an sich bekannter Weise aufgesetzt ist.

In eine Trennfuge zwischen Zylinderkopf 2 und Gehäuse 4 ist ebenfalls in an sich bekannter Weise eine metallische Zylinderkopfdichtung 5 eingelegt. Diese weist mehrere Durchgangsöffnungen auf, wobei Öffnungen 6 Brennräume der Brennkraftmaschine 1 begrenzen und abdichten und weitere Öffnungen 7 den Durchtritt von Kühlflüssigkeiten und Schmierflüssigkeiten ermöglichen sowie Öffnungen 8 der Durchführung von Zylinderkopfschrauben dienen.

Die Zylinderkopfdichtung 5 ist beispielsweise von mehrlagigem Aufbau, wobei im Kern ein Trägerblech 9 vorgesehen ist und beidseitig dazu Decklagen 10 und 11. Diese Decklagen 10 bzw. 11 sind auf ihren dem Zylinderkopf 2 bzw. dem Gehäuse 4 zugewandten Seiten mit einer Beschichtung 12 versehen sein.

Das Trägerblech 9 kann beispielsweise eine Dicke von 0, 3 mm bis 1,5 mm aufweisen, bevorzugt etwa 0,5 mm. Die Werte für die Decklagen 10 und 11 können 0,2 mm bis 0,4mm, bevorzugt etwa 0,25 mm betragen, die der Beschichtung 12 0,01 mm bis 0,04 mm, bevorzugt etwa 0,017 mm bis 0,03 mm.

Das Trägerblech 9 muß nicht vollflächig ausgebildet sein, sondern kann, wie dem Fach mann der Dichtungstechnik geläufig, aus mehreren Teilstücken bestehen oder einstückig mäanderförmig ausgebildet sein. Im Falle einer Mehrteiligkeit können dementsprechend viele Anschlußfahnen 13 vorgesehen sein. Die Integration von elektrischen Leiterbahnen sowie Druckverteilungs- und Druckverlaufssensoren sind beispielsweise aus DE-44 23 893 A1 bekannt.

Zur mittelbaren Energieeinbringung in die Zylinderkopfdichtung 5 ist diese mit über seitliche Begrenzungen von Zylinderkopf 2 bzw. Gehäuse 4 hinausgehende, als vergleichsweise großflächige Fahnen ausgebildeten Koppelbereichen 20 ausgebildet, auf welche ein demgegenüber elektrisch isoliertes, mit einem elektrischen Stromkreis verbundenes Koppelelement 21 aufgesetzt ist. Dieses Koppelelement 21 wird vom elektrischen Strom durchflossen und die hierbei entstehende Wärmeenergie wird durch flächige Anlage dieses Elementes 21 an den Koppelbereich 20 in die Zylinderkopfdichtung 5 übertragen. Für eine gleichmäßige Energieeinbringung können mehrere Koppelelemente 21 an der Brennkraftmaschine 1 vorgesehen sein.

Der Brennkraftmaschine 1 kann des weiteren ein elektrisches Steuergerät 30 sowie ein Sensor 31 zur Ermittlung der Temperatur T der Kühlflüssigkeit zugeordnet sein. Nach einem Kaltstart der Brennkraftmaschine 1 oder unmittelbar davor, ausgelöst beispielsweise durch das Öffnen einer Tür des Kraftfahrzeuges, kann der Sensor 31 die aktuelle Temperatur T ermitteln und diesen Wert in das Steuergerät 30 übertragen. In diesem kann ein unterer Temperaturgrenzwert abgespeichert sein, welcher mit dem aktuellen Temperaturwert verglichen wird. Wird dieser Grenzwert unterschritten, d. h. auf Kaltstart erkannt, so sorgt das Steuergerät 30 für eine Bestromung entweder unmittelbar der Zylinderkopfdichtung 5 oder aber des Koppelelementes 21.

Im Falle einer Bestromung vor dem Start der Brennkraftmaschine erfolgt die Energieeinbringung aus dem Bordnetz des Kraftfahrzeuges, beispielsweise aus der üblicherweise verwendeten Batterie oder einem zusätzlichen elektrischen Energiespeicher.

Die Zeitspanne, während der die elektrische Energie in die Zylinderkopfdichtung 5 eingebracht wird, kann durch einen im Steuergerät 30 integrierten Zeitzähler vorbestimmt sein oder aber durch einen ständigen Vergleich der aktuell vom Sensor 31 erfaßten Temperatur T mit einem im Steuergerät 30 abgespeicherten oberen Grenzwert für diese Temperatur T.

Für den Fall einer Verwendung einer bezüglich des Kraftfahrzeuges externen Energiequelle kann vorgesehen sein, daß die elektrische Verbindungsleitung 14, welche den elektrischen Strom entweder mittelbar in die Zylinderkopfdichtung 5 einbringt, mit einem Stecker 32, welcher dem Kraftfahrzeug zugeordnet ist, versehen ist, wobei dieser Stecker 32 wiederum über eine weitere elektrische Verbindungsleitung beispielsweise mit einem Hausstromnetz verbunden sein kann. Bei dieser Verwendung von elektrischem Strom aus dem Hausstromnetz welcher dort ggf. nach dem Fotovoltaikprinzip erzeugt werden kann, kann ebenfalls eine temperatur- oder zeitgesteuerte Erwärmung vorgesehen sein.

Für den vorbeschriebenen Fall der Verwendung eines externen Stromnetzes oder für den Fall einer Erwärmung der Kühlflüssigkeit vor dem Anlassen der Brennkraftmaschine kann zusätzlich vorgesehen sein, daß der Brennkraftmaschine eine elektrisch angetriebene Kühlflüssigkeitsumwälzpumpe, welche die üblicherweise verwendete Kühlflüssigkeitspumpe sein kann, zugeordnet ist und diese dann ebenfalls mit dem aktuell verwendeten elektrischen Stromkreis verbindbar ist. Hierdurch wird vorteilhafterweise eine schnellere und gleichmäßigere Erwärmung erzielt.

## Patentansprüche

1. Anordnung zum Erwärmen der Kühlflüssigkeit einer Brennkraftmaschine (1) vor oder nach einem Start dieser Brennkraftmaschine, mit einer zwischen einem Zylinderkopf (2) und einem Gehäuse (4) der Brennkraftmaschine (1) angeordneten, metallischen Zylinderkopfdichtung (5), **dadurch gekennzeichnet, daß** die Zylinderkopfdichtung (5) einen gemeinsam mit ihr ausgebildeten, über seitliche Begrenzungen von Zylinderkopf (2) bzw. Gehäuse (4) hinausgehenden Koppelbereich (20) aufweist, auf welchen ein Koppelelement (21) wirkt, welches bzgl. der Zylinderkopfdichtung (5) elektrisch isoliert und mit einem elektrischen Stromkreis derart verbunden und als Widerstandselement ausgebildet ist, daß es Wärmeenergie in die Zylinderkopfdichtung einbringt.

2. Verwendung der Anordnung nach Anspruch 1 in einem mit der Brennkraftmaschine (1) ausgestatteten Kraftfahrzeug.

## Claims

1. Arrangement for heating the coolant liquid of an internal combustion engine (1) before or after this internal combustion engine has started, having a metallic cylinder head gasket (5) which is arranged between a cylinder head (2) and a housing (4), **characterized in that** the cylinder head gasket (5) has a coupling region (20) which is formed together with it, protrudes beyond lateral boundaries of the cylinder head (2) and/or housing (4) and on which a coupling element (21) acts which is electrically insulated with respect to the cylinder head gasket (5) and is connected to an electrical circuit, and embodied as a resistor element, in such a way that it introduces thermal energy into the cylinder head gasket.

2. Use of the arrangement according to Claim 1 in a vehicle equipped with the internal combustion engine (1).

## Revendications

1. Dispositif de chauffage du liquide de refroidissement d'un moteur à combustion interne (1) avant ou après un démarrage de ce moteur à combustion interne, avec un joint de culasse métallique (5) disposé entre une culasse (2) et un carter (4) du moteur à combustion interne (1), **caractérisé en ce que** le joint de culasse (5) présente une zone de couplage (20) formée en même temps que lui et s'étendant au-delà des limites latérales de la culasse (2), respectivement du carter (4), sur laquelle agit un élément de couplage (21), qui est électriquement isolé par rapport au joint de culasse (5) et est raccordé à un circuit électrique et est constitué par un élément résistant d'une manière telle qu'il injecte de l'énergie thermique dans le joint de culasse.

2. Utilisation du dispositif suivant la revendication 1 dans un véhicule automobile équipé du moteur à combustion interne (1).
